# EUROPÄISCHE PATENTANMELDUNG

(11) **EP 1 724 569 A2**
(43) Veröffentlichungstag der Anmeldung: **22.11.2006**
(21) Anmeldenummer: 06009196.4
(22) Anmeldetag: 04.05.2006
(51) Int. Cl.: G01N 21/90

(54) **Vorrichtung zum Inspizieren etikettierter Gefässe**

(30) Priorität: 21.05.2005 DE 102005023534
(71) Anmelder: KRONES AG, 93073 Neutraubling (DE)
(72) Erfinder: Kwirandt, Rainer, Dr., 93092 Barbing (DE)

(57) **Zusammenfassung**

Die Erfindung betrifft eine Vorrichtung zum Inspizieren etikettierter Gefäße mit wenigstens einer Kamera zum Abbilden zumindest der etikettierten Bereiche der Gefäße und wenigstens einer Beleuchtungseinrichtung, die polarisiertes Licht abstrahlt.

## Beschreibung

Die Erfindung betrifft eine Vorrichtung zum Inspizieren etikettierter Gefäße gemäß dem Oberbegriff des Anspruchs 1.

Eine Inspektionsvorrichtung dieser Art ist aus US 4 509 081 bekannt. Schwierigkeiten ergeben sich insbesondere bei Etiketten aus z.B. Kunststofffolienmaterial mit einer hochglänzenden Oberfläche, da in solchen Fällen das aufgenommene Kamerabild störende Lichtreflexe beinhaltet und somit eine sichere Bildauswertung zur Erkennung von beispielsweise Rissen, Löchern oder grafischen Darstellungen in/auf durch eine Schrumpfbehandlung an die Gefäßkontur angeformten Etiketten nicht möglich ist. Diese können so gestaltet sein, dass im Wesentlichen die gesamte Gefäßumfangsfläche bedeckt ist.

Der Erfindung liegt die Aufgabe zu Grunde, ein verbessertes Inspektionssystem für etikettierte Gefäße oder dgl. anzugeben.

Gelöst wird die Aufgabe durch die kennzeichnenden Merkmale des Anspruchs 1.

Durch Verwendung von polarisiertem Licht zur Beleuchtung der zu inspizierenden Gefäße besteht die Möglichkeit, die von der Beleuchtungseinrichtung verursachten Reflexe auf den von einer Kamera aufgenommenen Bereichen etikettierter Gefäße zu unterdrücken. Besonders vorteilhaft ist der Einsatz von linear polarisiertem Licht.

In Verbindung mit einem vor der Kamera installierten Polarisationsfilter, dessen Polarisationsebene zu der des von der Beleuchtungseinrichtung abgestrahlten polarisierten Lichts gekreuzt verläuft, d.h. rechtwinklig dazu ausgerichtet ist, kann die Aufnahme von Reflexlicht durch die Kamera verhindert werden. Es gelangen lediglich diffuse Lichtanteile vom zu prüfenden Gefäß zur Abbildung in die Kamera.

Besonders günstig ist eine Ausgestaltung einer Beleuchtungseinrichtung, die polarisiertes Licht abstrahlt, dessen Polarisationsebene rechtwinklig zur Gefäßhochachse und/oder parallel zu einer Transportebene der Gefäße ausgerichtet ist. Zu diesem Zweck ist im Bereich zwischen der Lichtquelle der Beleuchtungseinrichtung und dem zu inspizierenden Objekt ein lineares Polarisationsfilter angeordnet, dessen Polarisationsrichtung in der angegebenen Weise ausgerichtet ist.

Von Vorteil ist eine Verstellbarkeit der Polarisationsfilter sowohl auf Seiten der Beleuchtungseinrichtung als auch der Kamera, da durch Drehen der Filter in ihrer eigenen Oberflächenebene aber auch eine Justage der Neigung der Polarisationsfilter bezüglich einer Transportebene der Gefäße eine exakte Anpassbarkeit an unterschiedliche Gefäßgeometrien gegeben ist, um eine Grundeinstellung vornehmen zu können, in der von der Beleuchtungseinrichtung verursachtes Reflexlicht möglichst weitgehend ausgelöscht wird und nur diffuse Lichtanteile in die Kamera gelangen.

Besonders vorteilhaft ist eine Ausbildung der Beleuchtungseinrichtung zur annähernd vollumfänglichen Beaufschlagung der Mantelfläche eines Gefäßes mit linear polarisiertem Licht, insbesondere quer zur Gefäßhochachse.

Die Beleuchtungseinrichtung kann aus mehreren einzelnen Leuchtschirmen gebildet werden, die arenaartig um ein sich in der Inspektionszone befindliches Gefäß herum umfänglich versetzt angeordnet sind. Diese einzelnen Leuchtschirme sind vorteilhafterweise so angeordnet, dass die zu prüfenden Gefäße von einem Förderer, insbesondere einem Förderband, mit aufrechter Ausrichtung der Inspektionszone zu- und abführbar sind und für wenigstens eine Kamera an mehreren Umfangsstellen Bereiche zur freien Durchsicht auf die Mantelfläche eines sich in der Inspektionszone befindlichen Gefäßes bestehen. Bevorzugt werden wenigstens zwei auf gegenüberliegenden Seiten des die Gefäße transportierenden Förderers angeordnete Kameras vorgesehen, die über Zwischenschaltung optischer Mittel, insbesondere Spiegel, über jeweils zwei Strahlengänge zwischen den Leuchtschirmen umfänglich versetzt auf ein in der Inspektionszone befindliches Gefäß blicken, d. h. im Falle von zwei Kameras werden insgesamt vier verschiedene, sich teilweise überlappende Umfangsabschnitte des Gefäßes wiedergebende Abbildungen erzeugt und ausgewertet, die bei gleich langen Strahlengängen auch gleich groß sind.

Die Bildaufnahme und Beleuchtung kann bei Verwendung mehrerer Kameras so gesteuert werden, dass nicht eine gleichzeitige Aufnahme und Beleuchtung eines Gefäßes zum selben Zeitpunkt stattfindet, sondern unmittelbar nacheinander durch jeweils nur eine Kamera erfolgt. Mit dieser Maßnahme ist vorteilhafterweise die Beleuchtung für jede einzelne Kamera individuell angepasst ausführbar, d. h. beispielsweise können für jede Kamera verschiedene Leuchtschirme aktiviert werden. Die Leuchtschirme können beispielsweise mit einer Vielzahl von LEDs bestückt sein, die problemlos für eine Kurzzeitbeleuchtung ansteuerbar sind.

Nachfolgend wird ein bevorzugtes Ausführungsbeispiel anhand einer Figur erläutert. Sie zeigt eine Inspektionsvorrichtung in einer schematischen Draufsicht.

Mit Hilfe eines gerade verlaufenden Förderbandes 1 werden etikettierte Flaschen 2 oder dgl. Gefäße aus Glas, Kunststoff oder einem anderen (semi-)transparenten Material in einer einspurigen Reihe mit gegenseitigen Zwischenabständen kontinuierlich gefördert. Die Mantelfläche einer Flasche 2 ist von einem Etikett, insbesondere einem Sleeve (Schlauchetikett), vollumfänglich umschlossen, das sich eng an die Außenkontur der Flasche anschmiegt. Dieses Etikett bzw. Sleeve kann aus einem wenigstens teiltransparenten Kunststofffolienmaterial bestehen, das mit einem produktund/oder flaschenabhängigen Aufdruck versehen ist.

Seitlich neben dem Förderband 1 ist eine Kamera 3 mit einem Objektiv 4 und einem dem Objektiv vorgeordneten linearen Polarisationsfilter 5 positioniert, die auf Spiegel L2 und R2 blickt. Der vertikal auf einer Grundplatte stehend angeordnete Spiegel L2 bildet in Verbindung mit einem weiteren vertikalen Spiegel L1 einen linken Strahlengang L, während der ebenfalls vertikal auf der Grundplatte stehende Spiegel R2 in Zusammenarbeit mit einem zweiten vertikal stehend angeordneten Spiegel R1 einen rechten Strahlengang R bildet. Diese beiden quer zum Förderband 1 gerichteten Strahlengänge L und R schneiden sich mit ihren optischen Achsen in etwa mittig über dem Förderband 1 unter einem gemeinsamen Winkel von beispielsweise 74 Grad und bilden im Kreuzungsbereich eine Inspektionszone, in der die Mantelfläche einer zu untersuchenden Flasche 2 aus zwei umfänglich versetzten Richtungen auf die zugeordnete Kamera 3 abgebildet wird. Um gleich große Abbildungen zu erhalten, ist die Länge der Strahlengänge L und R ausgehend von der Kamera bis zum Schnittpunkt der optischen Achsen der beiden Strahlengänge gleich lang. Die Höhenposition der Kamera 3 ist so gewählt, dass sie annähernd mittig horizontal auf eine Flasche blickt.

Zwischen den beiden Strahlengängen L und R befindet sich ein frontal, d. h. mit der Lichtabstrahlrichtung rechtwinklig zur Förderbahn des Förderbandes 1 ausgerichteter Leuchtschirm 6a, dessen Lichtaustrittsebene zumindest annähernd parallel zur Hochachse einer sich in der Inspektionszone befindenden Flasche 2 verläuft. Zwischen dem Strahlengang L und dem Förderband 1 sowie zwischen dem Strahlengang R und dem Förderband 1 ist ein Leuchtschirm 6b bzw. 6c angeordnet. Die Lichtabstrahlrichtung beider Leuchtschirme 6b und 6c schließt mit der Förderrichtung des Förderbandes 1 jeweils einen spitzen Winkel ein, wobei der Leuchtschirm 6b eine zu untersuchende Flasche 2 - bezogen auf die Förderrichtung - im Wesentlichen von der rückwärtigen Seite her beleuchtet und der Leuchtschirm 6c die gleiche Flasche 2 im Wesentlichen von vorne entgegen der Förderrichtung gerichtet ausleuchtet. Der zentrale Leuchtschirm 6a besteht aus einem Doppelmodul, d.h. seine Lichtaustrittsfläche besitzt im Vergleich zu den anderen Leuchtschirmen 6b, 6c eine doppelt so große Breite, und beleuchtet die Flasche 2 von der Seite quer zur Förderrichtung.

Jeder der genannten, auf einem Halbkreis angeordneten und in einer Ebene mit der Kamera 3 liegenden Leuchtschirme 6a, 6b und 6c weist an seiner zur Förderebene im Wesentlichen senkrecht ausgerichteten Lichtaustrittsfläche ein lineares Polarisationsfilter 7 auf, dessen Polarisationsrichtung im Wesentlichen parallel zur Förderebene, d. h. rechtwinklig zur Hochachse der Flaschen 2 ausgerichtet ist. Das dem Kameraobjektiv vorgeordnete lineare Polarisationsfilter 5 ist mit seiner Polarisationsrichtung annähernd rechtwinklig zur Polarisationsrichtung der Polarisationsfilter 7 verlaufend ausgerichtet, d. h. es liegt eine gekreuzte Anordnung der paarweise zusammenwirkenden Polarisationsebenen vor.

Die im vorhergehenden beschriebene Anordnung von Kamera, Objektiv mit Polarisationsfilter, Spiegeln und Leuchtschirmen mit Polarisationsfiltern findet sich in gleicher Anordnung achsensymmetrisch zur Förderrichtung gespiegelt auf der gegenüberliegenden Seite des Förderbandes 1 wieder. Aufgrund der um die Inspektionszone herum insgesamt arenaartigen Anordnung der sechs Leuchtschirme, deren Lichtaustrittsebenen jeweils auf die Inspektionszone ausgerichtet sind und dadurch eine umfängliche Beleuchtung der Mantelfläche einer Flasche 2 erzeugen, sowie der vier, sich ebenfalls in der Inspektionszone kreuzenden Strahlengänge ist eine umfänglich vollständige Abbildung der etikettierten Mantelfläche einer Flasche 2 sichergestellt.

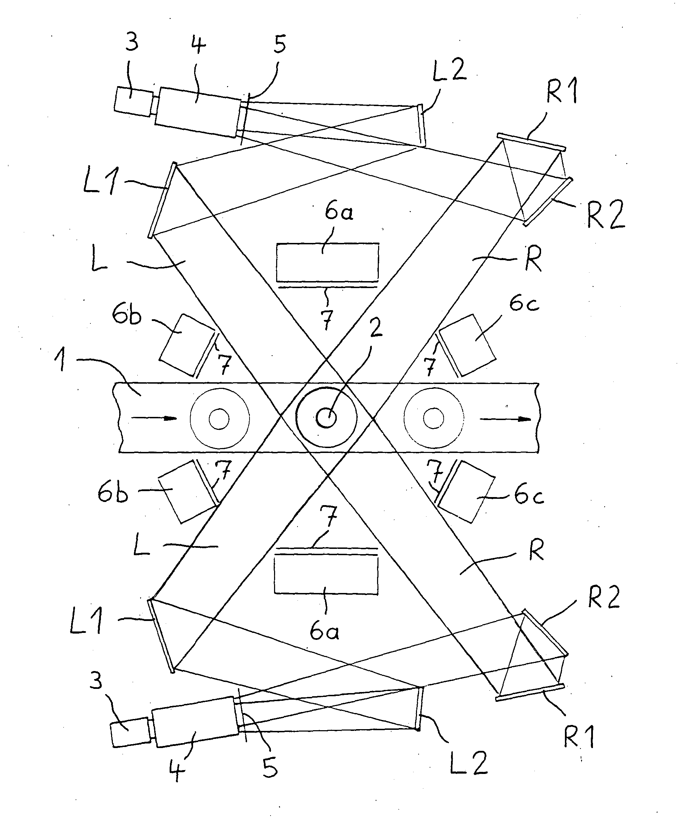

Durch die gekreuzte Anordnung der Polarisationsebenen der linearen Polarisationsfilter 5 und 7 wird die Abbildung von sich auf der Etikettenoberfläche reflektierenden Lichtanteilen der Leuchtschirme sowie eine direkte Lichteinstrahlung von den einer Kamera bzw. ihren Strahlengängen gegenüberliegenden Leuchtschirmen unterdrückt. Nur die von einem Etikett abgestrahlten diffusen Anteile gelangen zu den Kameras, die beispielsweise als CCD-Kameras mit einem Flächenarray ausgebildet sein können, und erzeugen dort eine annähernd gleichmäßig ausgeleuchtete Abbildung der zu untersuchenden Flasche 2 bzw. eines auf ihr angebrachten Sleeves. Auf Grund der im Prinzip vollumfänglichen Ausleuchtung der Mantelfläche einer Flasche 2 wird selbst bei stark strukturierten Oberflächen (Rillen, Taschen etc.) einer störenden Schattenbildung in den auszuwertenden Abbildungen erfolgreich entgegengewirkt.

Um eine möglichst optimale Unterdrückung von Lichtreflexen erreichen zu können, sind die Polarisationsfilter 5 und/oder 7 sowohl in ihrer Neigung in Bezug auf die Förderebene als auch in ihrer Drehlageausrichtung innerhalb ihrer Oberflächenebene verdrehbar gelagert. Auf dieser Weise ist eine optimale Feinanpassung an die gegebenen Verhältnisse möglich. Auch die Neigung der Leuchtschirme ist einstellbar.

Die Abbildung einer sich in der Inspektionszone befindenden Flasche 2 kann zeitgleich durch beide dem Förderband 1 gegenüberliegend positionierten Kameras 3 erfolgen, wobei eine Aktivierung aller Leuchtschirme denkbar ist. In bestimmten Fällen sind aber unmittelbar aufeinander folgende, zeitversetzte Aufnahmen einer Flasche 2 durch die beiden Kameras 3 von Vorteil, vor allem wenn bei den beiden Aufnahmen eine unterschiedliche Flaschenbeleuchtung erfolgen soll. So kann beispielsweise dann, wenn die dominierende Grundfarbe eines Sleeves oder Etiketts (z.B. Orange) mit der Farbe des sich in einer Flasche befindenden Produkts (z.B. Orangensaft) im Wesentlichen übereinstimmt, bei beiden Abbildungen die Beleuchtung durch den die Umfangsfläche der Flasche 2 auf der der jeweiligen Kamera 3 gegenüberliegenden Seite durch den zentralen Leuchtschirm 6a unterbleiben, während alle anderen fünf Leuchtschirme durch eine Steuerung zeitgleich aktiviert werden.

Mit dieser Maßnahme können gegenüber einer vollumfänglichen Beleuchtung für eine Bildauswertung besser geeignete Aufnahmen erzielt werden, die z.B. die Erkennung von Löchern oder Rissen in einem Sleeve erlauben. Dies wäre schwierig realisierbar, wenn sich der Sleeve bei einer rückseitigen Beleuchtung vor dem annähernd gleichfarbigen Hintergrund des sich in der Flasche befindlichen Produkts kaum abhebt bzw. unterscheidet. Zur weiteren Optimierung können nicht etikettenbedeckte Flaschenbereiche durch Blenden abgedeckt werden.

Eine zeitlich dicht aufeinander erfolgende Beleuchtung einer Flasche 2 ist bei der Verwendung von mit ggf. verschiedenfarbigen LEDs bestückten Leuchtschirmen durch eine entsprechende Triggersteuerung problemlos realisierbar.

Die Anwendung der beschriebenen Vorrichtung ist nicht auf die Inspektion etikettierter Flaschen, Dosen oder dgl. beschränkt.

## Patentansprüche

1. Vorrichtung zum Inspizieren etikettierter Gefäße (2) mit wenigstens einer Kamera (3) zum Abbilden zumindest der etikettierten Bereiche der Gefäße und wenigstens einer Beleuchtungseinrichtung (6a, 6b, 6c), **dadurch gekennzeichnet, dass** die Beleuchtungseinrichtung (6a, 6b, 6c) polarisiertes Licht abstrahlt.

2. Vorrichtung nach Anspruch 1, **dadurch gekennzeichnet, dass** die Beleuchtungseinrichtung (6a, 6b, 6c) linear polarisiertes Licht abstrahlt.

3. Vorrichtung nach Anspruch 1 oder 2, **dadurch gekennzeichnet, dass** die Beleuchtungseinrichtung (6a, 6b, 6c) linear polarisiertes Licht abstrahlt, dessen Polarisationsebene rechtwinklig zur Gefäßhochachse und/oder parallel zu einer Transportebene der Gefäße (2) ausgerichtet ist.

4. Vorrichtung nach wenigstens einem der Ansprüche 1 bis 3, **dadurch gekennzeichnet, dass** der wenigstens einen Kamera (3) ein Polarisationsfilter (5) vorgeordnet ist.

5. Vorrichtung nach Anspruch 4, **dadurch gekennzeichnet, dass** das Polarisationsfilter ein lineares Polarisationsfilter (5) ist, dessen Polarisationsebene annähernd rechtwinklig zu der Polarisationsebene des von der Beleuchtungseinrichtung (6a, 6b, 6c) abgestrahlten Lichts ausgerichtet ist.

6. vorrichtung nach wenigstens einem der vorhergehenden Ansprüche, **dadurch gekennzeichnet, dass** die Polarisationsebene von Polarisationsfiltern (5, 7) der wenigstens einen Kamera (3) und/oder der Beleuchtungseinrichtung (6a, 6b, 6c) verstellbar ist, insbesondere durch Drehen der Filter in ihrer eigenen Oberflächenebene.

7. Vorrichtung nach wenigstens einem der vorhergehenden Ansprüche, **dadurch gekennzeichnet, dass** die Neigung von Polarisationsfiltern (5, 7) der wenigstens einen Kamera (3) und/oder der Beleuchtungseinrichtung (6a, 6b, 6c) bezüglich einer Transportebene der Gefäße (2) einstellbar ist.

8. Vorrichtung nach wenigstens einem der vorhergehenden Ansprüche, **dadurch gekennzeichnet, dass** die Beleuchtungseinrichtung (6a, 6b, 6c) so ausgebildet ist, dass die Mantelfläche eines Gefäßes (2) annähernd voll umfänglich beaufschlagt wird, insbesondere quer zur Gefäßhochachse.

9. Vorrichtung nach Anspruch 8, **dadurch gekennzeichnet, dass** die Beleuchtungseinrichtung aus mehreren einzelnen Leuchtschirmen (6a, 6b, 6c) gebildet wird, die arenaartig um ein sich in einer Inspektionszone befindliches Gefäß (2) umfänglich versetzt angeordnet sind.

10. Vorrichtung nach Anspruch 9, **dadurch gekennzeichnet, dass** die Leuchtschirme (6a, 6b, 6c) so angeordnet sind, dass die zu prüfenden Gefäße (2) von einem Förderer (1), insbesondere Förderband, aufrecht stehend der Inspektionszone zu- und abführbar sind.

11. Vorrichtung nach Anspruch 10, **dadurch gekennzeichnet, dass** die Leuchtschirme (6a, 6b, 6c) seitlich neben dem Förderer (1) positioniert und so auf eine Inspektionszone über dem Förderer ausgerichtet sind, dass Leuchtschirme (6a) ein Gefäß (2) quer zu und Leuchtschirme (6a, 6b) schräg in und/oder entgegen der Förderrichtung mit Licht beaufschlagen.

12. Vorrichtung nach einem der Ansprüche 1 bis 11, **dadurch gekennzeichnet, dass** zwischen der wenigstens einen Kamera (3) und einem in einer Inspektionszone zu untersuchenden Gefäß (2) Spiegel (L1, L2, Rl, R2) zur Erzeugung von sich in der Inspektionszone kreuzenden Strahlengängen (L, R) angeordnet sind.

13. Vorrichtung nach einem der Ansprüche 1 bis 12, **dadurch gekennzeichnet, dass** Leuchtschirme (6a, 6b, 6c) beiderseits eines Gefäße (2) transportierenden Förderers (1) so angeordnet sind, dass Bereiche zur freien Durchsicht für die wenigstens eine Kamera (3) über Strahlengänge (L, R) auf ein sich in einer Inspektionszone befindendes Gefäß gegeben sind, insbesondere für zwei auf gegenüberliegenden Seiten des Förderers angeordnete Kameras zur vollumfänglichen Abbildung der Mantelfläche eines Gefäßes mittels gleichzeitiger oder zeitversetzter Aufnahme durch die Kameras.
